# EUROPEAN PATENT APPLICATION

(11) **EP 4 366 060 A1**
(43) Date of publication of application: **08.05.2024**
(21) Application number: 22849133.8
(22) Date of filing: 29.06.2022
(51) Int. Cl.: H01M 50/262, H01M 10/613, H01M 10/625, H01M 10/647, H01M 10/6556, H01M 50/209, H01M 50/224, H01M 50/249

(54) **VEHICULAR BATTERY PACK AND ELECTRIC TRUCK**

(30) Priority: 29.07.2021 JP 2021123990
(71) Applicant: Daimler Truck AG, 70771 Leinfelden-Echterdingen (DE)
(72) Inventor: OBERHOFFER, Simon, Kawasaki-shi, Kanagawa 211-8522 (JP); WU, ZiQiang, Ningde, Fujian 352100 (CN); YE, QiQiang, Ningde, Fujian 352100 (CN); LI, XiaoJi, Ningde, Fujian 352100 (CN)
(74) Representative: Hofstetter, Schurack & Partner
(86) International application number: PCT/JP2022/026033
(87) International publication number: WO 2023/008064

(57) **Abstract**

A vehicular battery pack (10) includes: a battery module (1) including a plurality of battery cells that supply power to a motor for driving a vehicle; a bottom plate (31) installed below the battery module (1); and a surrounding frame (32) disposed on the bottom plate (31) and surrounding the battery module (1). The surrounding frame 32 includes an extending portion (35) protruding inwardly and connected to the bottom plate (31). The battery module (1) includes an L-shaped module-end (1a) facing the bottom plate (31) and supported by the extending portion (35).

## Description

### [Technical Field]

The present disclosure relates to a vehicular battery pack that supports a battery module by a surrounding frame, and an electric truck including the vehicular battery pack.

### [Background Art]

Conventionally, from a viewpoint of reducing environmental loads, electric vehicles (EVs and HEVs) that travel by electric motors have been developed in the field of not only passenger cars but also commercial vehicles such as trucks (see Patent Document 1).

### [Citation List]

### [Patent Literature]

[Patent Document 1] Japanese Laid-Open Patent Publication No. 2016-113063

### [Summary of Invention]

### [Technical Problem]

In a battery pack (vehicular battery pack) mounted on an electric vehicle to drive the vehicle as described above, from a viewpoint of extending the cruising range and ensuring the mountability, etc., it has been a challenge to increase the energy density (energy amount per unit volume or per unit weight). In view of this, it is conceivable to reduce the thickness of the components of the battery pack to reduce the volume and/or the weight. However, thinner components make the battery pack difficult to secure stiffness. Thus, in the battery pack, it is demanded to increase the energy density while ensuring stiffness.

The present disclosure has been devised in view of the above-mentioned problems, and one of the objects of the present disclosure is to increase energy density while ensuring stiffness in a vehicular battery pack.

### [Solution to Problem]

The present disclosure has been made to solve at least a part of the above problems, and can be realized as the following aspects or application examples.
(1) A vehicular battery pack according to the present application example includes: a battery module including a plurality of battery cells that supply power to a motor for driving a vehicle; a bottom plate installed below the battery module; and a surrounding frame disposed on the bottom plate and surrounding the battery module, wherein: the surrounding frame includes an extending portion protruding inwardly and connected to the bottom plate; and the battery module includes an L-shaped module-end facing the bottom plate and supported by the extending portion.
   According to such a vehicular battery pack, the weight of the battery module can be received by the surrounding frame. This reduces the load that acts on the bottom plate, so that the thickness of the bottom plate can be reduced, and consequently, a weight reduction in the bottom plate can be realized. Therefore, in the vehicular battery pack, the energy density can be increased while the stiffness is secured.
(2) In the vehicular battery pack according to the present application example, the bottom plate may be a cooling plate that cools the battery module and may include a cooling passage through which coolant flows.
   According to the bottom plate which is a cooling plate, the battery module can be cooled by the coolant that flows through the cooling passage inside the bottom plate. Such cooling of the battery module in the vehicular battery pack makes it possible to efficiently control the temperature of the battery module, and thereby, contributes to the extension of the cruising range of the vehicle.
(3) In the vehicular battery pack according to the present application example, the module-end may be coupled to the extending portion via a spacer, and may be disposed with a gap between the module-end and the extending portion.
   According to such a configuration, the gap suppresses the transfer of heat from the module-end to the extending portion, reducing the influence of heat in the battery module to the surrounding frame. This provides protection for the surrounding frame against the heat of the battery module while providing support for the battery module with the surrounding frame.
(4) In the vehicular battery pack according to the present application example, the battery module may include: a cell stack in which the battery cells are stacked along a predetermined stacking direction; and a pair of end plates disposed on both end faces of the cell stack in the stacking direction and forming the module-ends.
   According to the end plates described above, the cell stack can be supported from both sides in the stacking direction, and the L-shaped module-ends can be easily formed. Therefore, the battery module can be easily supported by the surrounding frame while the stiffness of the battery module is increased.
(5) The vehicular battery pack according to the present application example may further include a first stiffener plate extending in a cross direction that intersects the stacking direction and fixed to at least one of the bottom plate and the surrounding frame, and the battery module may include a mid-plate disposed in an intermediate portion of the cell stack in the stacking direction and fixed to the first stiffener plate.
   According to the mid-plate described above, the stiffness can be increased in the intermediate portion of the cell stack in the stacking direction. According to the first stiffener plate described above, the stiffness of the vehicular battery pack can be increased. Further, according to the configuration in which the mid-plate is fixed to the first stiffener plate, it is possible to suppress the displacement of the mid-plate with respect to the bottom plate or the surrounding frame. This suppresses the positional deviation of the battery module with respect to the bottom plate or the surrounding frame, so that the reliability of the vehicular battery pack can be increased.
(6) In the vehicular battery pack according to the present application example, the mid-plate may include: a pair of main faces each facing the battery cell; a plurality of side faces each connecting outer edges of the pair of main faces; and a recess extending in the cross direction at one of the side faces and accommodating the first stiffener plate therein.
   If the recess described above is provided in the mid-plate, the recess can be used as an accommodating space for the first stiffener plate, so that space saving can be realized. Therefore, the stiffness of the vehicular battery pack can be increased by the first stiffener plate, and at the same time, since the first stiffener plate is accommodated in the recess, it is possible to increase the output while avoiding an increase in size and/or weight of the vehicular battery pack, further increasing the energy density.
(7) The vehicular battery pack according to the present application example may further include: a plurality of the battery modules arranged in parallel in postures that stacking directions along which the battery cells are stacked are parallel to each other; and a second stiffener plate that extends along the stacking directions between the battery modules adjacent to each other and that is fixed to the surrounding frame, and the second stiffener plate may include an L-shaped plate-end facing the bottom plate and supported by the extending portion.
   According to such a configuration, the second stiffener plate can be arranged by utilizing the dead space between the battery modules. Further, according to the configuration in which the L-shaped plate-end is supported by the extending portion of the surrounding frame, the weight of the second stiffener plate and the members supported by the second stiffener plate can also be received by the surrounding frame. This further reduces the load that acts on the bottom plate, so that the thickness of the bottom plate can be further reduced. Thus, the energy density can be further increased while the stiffness is secured.
(8) In the vehicular battery pack according to the present application example, the surrounding frame may be an aluminum extruded profile and may include a hollow formed in the extending portion.
   According to such a configuration, in the surrounding frame, it is possible to suppress a weight increase while securing the stiffness for supporting the module-end. Therefore, the energy density can be further increased.
(9) An electric truck according to the present application example includes: a vehicular battery pack defined in any one of above (1) to (8); and a pair of side rails disposed above the vehicular battery pack to suspend and support the vehicular battery pack.

According to such an electric truck, since the energy density is increased while the stiffness is secured in the vehicular battery pack as described above, the protectability of the vehicular battery pack can be ensured even in collisions, and in addition, an excellent cruising range can be realized. Further, since the bottom plate can be thinned by the structure of receiving the weight of the battery module by the surrounding frame as described above, the height dimension of the vehicular battery pack can be suppressed. This makes it easy to secure the ground height even in the vehicular battery pack suspended and supported by the side rails.

### [Advantageous Effects of Invention]

According to the present disclosure, it is possible to increase the energy density while ensuring the stiffness in the vehicular battery pack.

### [Brief Description of Drawings]

FIG. 1 is a schematic top view of an electric vehicle.
FIG. 2 is a perspective view of a battery module.
FIG. 3 is an exploded perspective view of the battery module.
FIG. 4 is a perspective view of a mid-plate.
FIG. 5 is an exploded perspective view of a vehicular battery pack.
FIG. 6 is a cross-sectional view of a main part of the vehicular battery pack.
FIG. 7 is an enlarged view of part X of FIG. 6.
FIG. 8 is a cross-sectional view illustrating a fastening structure.
FIG. 9 is a cross-sectional view (a view corresponding to FIG. 6) of a main part of the vehicular battery pack according to a modification.

### [Description of Embodiments]

Embodiments of the present disclosure will now be described with reference to drawings. The following embodiments are merely illustrative and are not intended to preclude the application of various modifications and techniques not explicitly set forth in the embodiments. Each configuration of the following embodiments can be implemented by various modifications without departing from the gist thereof. Also, it can be selected as necessary, or can be combined as appropriate.

### [1. Configuration]

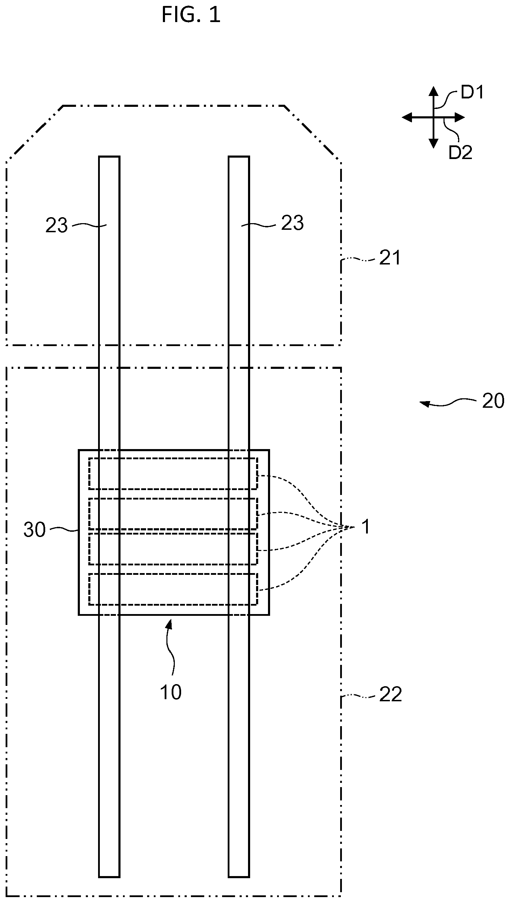

As illustrated in FIG. 1, an electric vehicle (vehicle) 20 according to the present embodiment is an electric vehicle or a hybrid vehicle that includes a battery pack (vehicular battery pack) 10 for driving, and that travels by driving a non-illustrated motor (electric motor) with electric power stored in the battery pack 10. Here, the electric vehicle 20 is illustrated as an electric truck having a cab 21 and a cargo box 22. FIG. 1 illustrates the cab 21 and the cargo box 22 by two-dot chain lines.

The battery pack 10 of the present embodiment is a substantially rectangular parallelepiped in external appearance, and has a substantially rectangular shape in a top view. The battery pack 10 is disposed below a pair of side rails 23 extending in a vehicle length direction D1, and is supported by and suspended from each of the side rails 23. Specifically, the battery pack 10 is supported by each of the side rails 23 while being suspended from each of the side rails 23 via non-illustrated brackets. However, the shape, the arrangement, and the supporting manner of the battery pack 10 should not be limited to those exemplified here. Although the electric vehicle 20 equipped with one battery pack 10 is illustrated here, the number of the battery packs 10 to be mounted on the electric vehicle 20 may be two or more.

The battery pack 10 of the present embodiment includes multiple battery modules 1 and a housing 30 that accommodates the battery modules 1. The present embodiment illustrates the battery pack 10 in which a single housing 30 accommodates four battery modules 1 arranged side by side in the vehicle length direction D1.

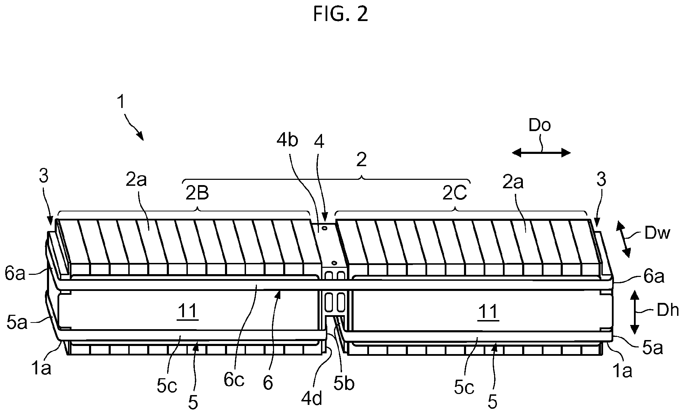

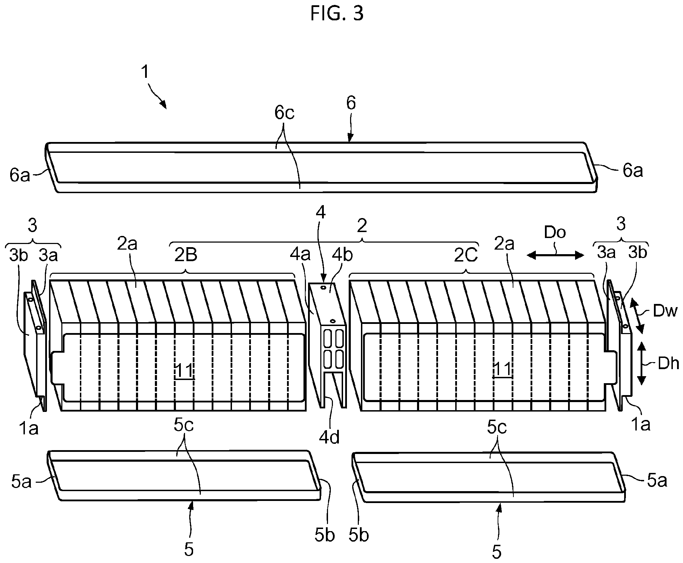

Each of the battery modules 1 is configured to be similar to each other. As illustrated in FIGS. 2 and 3, each of the battery modules 1 includes: a cell stack 2 in which multiple cells 2a are stacked in a predetermined stacking direction Do; a pair of end plates 3 disposed on both end faces of the cell stack 2 in the stacking direction Do; and a mid-plate 4 disposed in the intermediate portion of the cell stack 2 in the stacking direction Do. Each battery module 1 of the present embodiment further includes first belts 5 and a second belt 6 each of which bundles two or more battery cells 2a.

Each battery module 1 of the present embodiment is longer in the stacking direction Do than in each of a width direction Dw perpendicular to the stacking direction Do and a height direction Dh perpendicular to both the stacking direction Do and the width direction Dw, and forms an elongated rectangular parallelepiped shape. However, the shape of each battery module 1 should not be limited to the shape exemplified here.

The multiple battery cells 2a stacked in the cell stack 2 are configured to be identical to each other. Each battery cell 2a of the present embodiment is shorter in the stacking direction Do than in each of the width direction Dw and the height direction Dh, and forms a thin rectangular plate shape. In the cell stack 2, the multiple battery cells 2a are connected in series. The battery cells 2a supply power to the motor for driving the electric vehicle 20. Incidentally, on both sides of each cell stack 2 in the width direction Dw, heating foils 11 for warming the individual battery cells 2a are disposed.

The end plates 3 and the mid-plate 4 are reinforcing members for suppressing the deformation (increasing rigidity) of the cell stack 2. As illustrated in FIG. 3, each end plate 3 of the present embodiment has a thin part 3a which is in a thin rectangular plate shape and is disposed in contact with one of the battery cells 2a, and a thick part 3b smaller in the height direction Dh and thicker in the stacking direction Do as compared to the thin part 3a. The thin parts 3a of the pair of end plates 3 sandwich the cell stack 2 from both sides in the stacking direction Do. The thick part 3b of each end plate 3 serves as a fastening part to be tightened by the first belt 5 and the second belt 6.

Each battery module 1 of the present embodiment has L-shaped module-ends 1a formed by each step between the thin part 3a and the thick part 3b of the end plate 3 at both ends in the stacking direction Do of the battery module 1. To ensure supporting rigidity of the battery module 1, the module-ends 1a are preferably formed to be stronger and stiffer than members (e.g., the battery cells 2a) other than the module-ends 1a in the battery module 1.

In contrast, the mid-plate 4 of the present embodiment forms a shape of a rectangular plate which is slightly thicker than the thick part 3b of the end plate 3 and a part of which is provided with a dent (a recess 4d to be described later). The mid-plate 4 divides the multiple battery cells 2a of the cell stack 2 into two groups of a first group 2B and a second group 2C, and sandwiches each of the first group 2B and the second group 2C with the thin parts 3 of the end plates 3 from both sides in the stacking direction Do.

The present embodiment illustrates the battery module 1 in which the mid-plate 4 is provided at a position bisecting the cell stack 2 (the respective numbers of the battery cells 2a in the first group 2B and the second group 2C coincide with each other). However, the mid-plate 4 may be provided at any intermediate portion excluding both end portions of the cell stack 2 in the stacking direction Do, so that the respective numbers of the battery cells 2a in the first group 2B and the second group 2C divided by the mid-plate 4 may differ from each other.

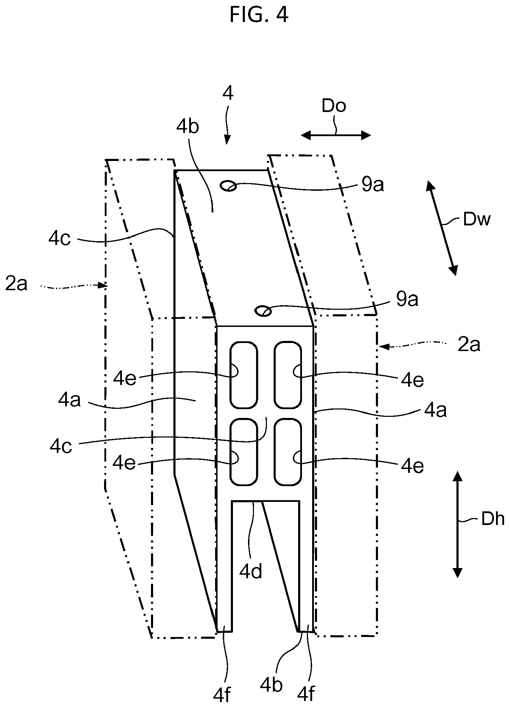

As illustrated in FIG. 4, the mid-plate 4 has a pair of main faces 4a each facing the battery cell 2a, multiple side faces 4b, 4c each connecting outer edges of the main faces 4a, and a recess 4d provided on at least one of the side faces 4b, 4c. The mid-plate 4 of the present embodiment has the main faces 4a each in a rectangular shape, four side faces 4b, 4c respectively connecting four sides corresponding to the outer edges of the main faces 4a to each other, and the recess 4d provided on only one of the side faces 4b, 4c.

Each of the main faces 4a forms a plane extending along the width direction Dw and the height direction Dh. In contrast, the four side faces 4b are divided into two lateral faces 4b extending along the stacking direction Do and the width direction Dw, and two longitudinal faces 4c extending along the stacking direction Do and the height direction Dh.

The recess 4d of the present embodiment extends in the width direction Dw (cross direction that intersects the stacking direction Do) at one (on the lower side in FIG. 4) of the lateral faces 4b. The recess 4d forms a substantially rectangular parallelepiped space, and opens in a substantially rectangular shape at each longitudinal face 4c.

The recess 4d of the mid-plate 4 functions as a receiving space for disposing another member(s) (for example, the first belts 5 and a first stiffener plate 7 to be described later). Further, a pair of legs 4f, which are formed between each main face 4a and the recess 4d in the mid-plate 4 of the present embodiment, serve as fastening parts to be tightened by the first belts 5.

The mid-plate 4 of the present embodiment is an aluminum extruded profile, and has hollows 4e extending in the width direction Dw. Here, the exemplified mid-plate 4 is provided with four hollows 4e each of which opens in a substantially rectangular shape at both of the longitudinal faces 4c. The mid-plate 4 is manufactured by extrusion of aluminum with the width direction Dw set as the extrusion direction.

As illustrated in FIGS. 2 and 3, the first belts 5 and the second belt 6 are each formed in an endless belt shape by, for example, metal. Each of the first belts 5 bundles one of the first group 2B and the second group 2C divided by the mid-plate 4 into one, whereas the second belt 6 bundles the entire cell stack 2 into one. As such, each of the first belts 5 bundles a smaller number of battery cells 2a as compared to the second belt 6.

The battery module 1 of the present embodiment includes a pair of first belts 5 provided on both sides of the mid-plate 4 in the stacking direction Do. One of the first belts 5 bundles two or more battery cells 2a constituting the first group 2B into one, and the other one of the first belts 5 bundles two or more battery cells 2a constituting the second group 2C into one.

Each of the first belts 5 has, specifically, a first outer belt portion 5a disposed outside in the stacking direction Do of the end plate 3, and an inner belt portion 5b disposed in the recess 4d of the mid-plate 4. Both the first outer belt portion 5a and the inner belt portion 5b of the present embodiment extend in the width direction Dw. The first outer belt portion 5a is disposed in contact with the thick part 3b of the end plate 3, and the inner belt portion 5b is disposed in contact with the leg portion 4f (see FIG. 4) of the mid-plate 4. It should be noted that, in each of the first belts 5, both of first intermediate portions 5c, which connect the both ends of the first outer belt portion 5a and the inner belt portion 5b to each other, extend in the stacking direction Do, and are disposed outside in the width direction Dw of the heating foils 11.

Each of the first belts 5 fastens the thick part 3b of the end plate 3 and the leg portion 4f of the mid-plate 4 by the first outer belt portion 5a and the inner belt portion 5b, respectively. Accordingly, each first belt 5 holds the multiple battery cells 2a (either one of the first group 2B and the second group 2C) stacked between the end plate 3 and the mid-plate 4 from both sides in the stacking direction Do.

The second belt 6 of the present embodiment is disposed at a position different from that of the first belts 5 in the height direction Dh. Here, as compared with the first belts 5, the exemplified second belt 6 is disposed on a side (the upper side in FIGS. 2 and 3) closer to the other lateral face 4b not provided with the recess 4d.

The second belt 6 has a pair of second outer belt portions 6a respectively disposed outside in the stacking direction Do of the pair of end plates 3. Each of the second outer belt portions 6a of the present embodiment extends in the width direction Dw. The pair of second outer belt portions 6a are disposed in contact with the thick parts 3b of the pair of end plates 3, respectively. It should be noted that, in the second belt 6, both of second intermediate portions 6c, which connect both ends of the pair of second outer belt portions 6a, extend in the stacking direction Do, and are disposed outside in the width direction Dw of the heating foils 11.

The second belt 6 fastens the thick parts 3b of the pair of end plates 3 by the pair of second outer belt portions 6a, respectively. Accordingly, the second belt 6 holds the cell stack 2 (both the first group 2B and the second group 2C) disposed between the pair of end plates 3 from both sides in the stacking direction Do.

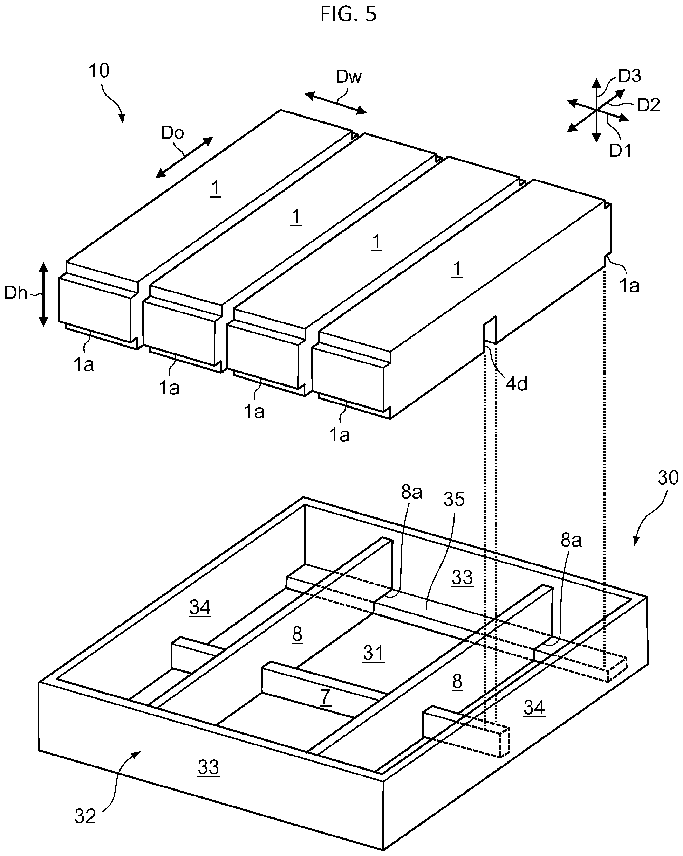

As illustrated in FIG. 5, in the battery pack 10, the multiple battery modules 1 are arranged in parallel in postures that the stacking directions Do thereof extend parallel to each other. The present embodiment illustrates the battery pack 10 in which each battery module 1 is disposed in a posture that the stacking direction Do coincides with the vehicle width direction (left-right direction) D2, the height direction Dh coincides with the vehicle height direction (up-down direction) D3, and both the module-end 1a and the recess 4d face down (to the side of a bottom plate 31 to be described later). Incidentally, in FIG. 5, each of the battery modules 1 is simplified. In the following description, the recess 4d provided in the mid-plate 4 of the battery module 1 is also referred to as "the recess 4d of the battery module 1".

In the battery pack 10 of the present embodiment, the recess 4d of each battery module 1 extends along the vehicle length direction D1. In addition, the four recesses 4d provided in the respective four battery modules 1 are aligned along the vehicle length direction D1. Similarly, the module-ends 1a of the four battery modules 1 are aligned along the vehicle length direction D1.

The housing 30 includes the bottom plate 31 installed below the battery modules 1, and a surrounding frame 32 disposed on the bottom plate 31 and surrounding the battery modules 1. Here, as an example, the bottom plate 31 has a rectangular shape, and the surrounding frame 32 vertically extends from four sides corresponding to the outer edges of the bottom plate 31 to form a square tube. The bottom plate 31 is formed thinner (has smaller thickness) than any one of the surrounding frame 32, a first stiffener plate 7, and second stiffener plates 8 to be described later. The housing 30 is provided with a lid plate (not illustrated) for closing the space defined by the bottom plate 31 and the surrounding frame 32 from above.

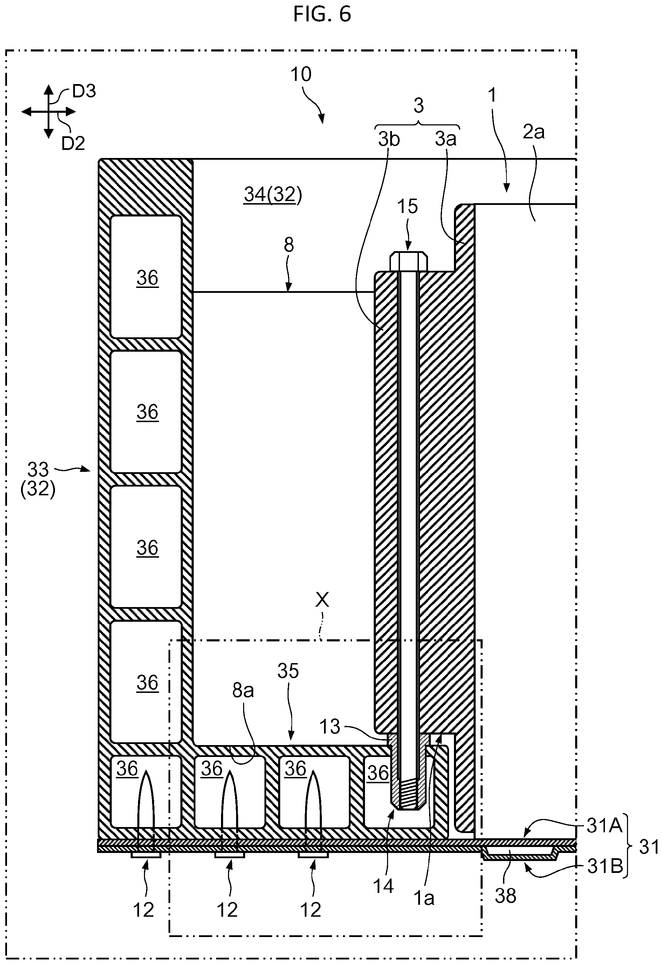

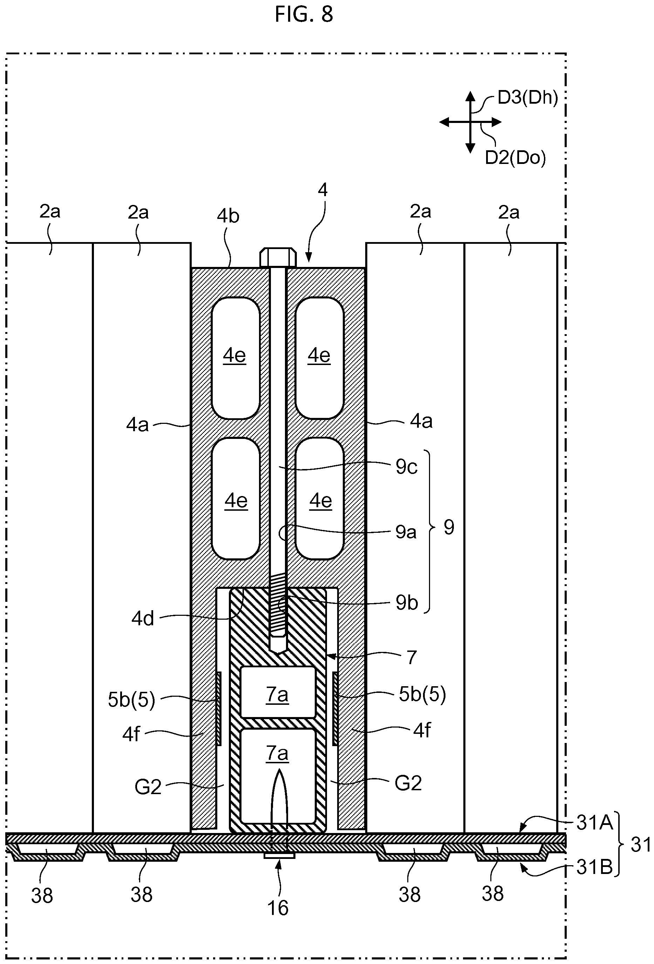

As illustrated in FIGS. 6 and 8, the bottom plate 31 of the present embodiment is a cooling plate that cools the battery modules 1, and has a cooling passage 38 through which coolant flows in the bottom plate 31. Specifically, the bottom plate 31 is configured by an upper plate 31A and a lower plate 31B overlaid with each other in the vehicle height direction D3, and has a hollow formed between these plate 31A, 31B and serving as the cooling passage 38. The bottom plate 31 serving as such a cooling plate is provided with an inlet and an outlet (both of which are not illustrated) of the coolant. Additionally, a protection plate (not shown) may be provided below the bottom plate 31 to increase the stiffness of the battery pack 10 and/or to protect the bottom plate 31 from flying stones. FIGS. 6 to 9 omit hatching of the cross-section of the battery cells 2a.

As illustrated in FIG. 5, the surrounding frame 32 specifically includes a pair of longitudinal walls 33 each extending in the vehicle length direction D1, and a pair of lateral walls 34 each extending in the vehicle width direction D2. The pair of longitudinal walls 33 are spaced apart from each other in the vehicle width direction D2, and the pair of lateral walls 34 are spaced apart from each other in the vehicle length direction D1. The longitudinal walls 33 face each of the battery modules 1 from the outside in the vehicle width direction D2 (outside in the stacking direction Do).

The surrounding frame 32 of the present embodiment has extending portions 35 respectively protruding inwardly (toward the battery modules 1) from the longitudinal walls 33 and each connected to the bottom plate 31. The extending portions 35 extend over the entire length in the vehicle length direction D1 of the respective longitudinal walls 33. As illustrated in FIG. 6, the extending portions 35 extend inwardly from the respective lower ends of the longitudinal walls 33. This example illustrates the extending portions 35 that each have a lateral cross section (the cross section along the vehicle width direction D2 and the vehicle height direction D3) in a rectangular shape and that each form an L-shape (a stair shape) in cooperation with the longitudinal wall 33.

The surrounding frame 32 of the present embodiment is an aluminum extruded profile. The longitudinal walls 33 and the extending portions 35 are manufactured by extrusion of aluminum with the vehicle length direction D1 set as the extrusion direction. In contrast, the lateral walls 34 are manufactured by extrusion of aluminum with the vehicle width direction D2 set as the extrusion direction.

The surrounding frame 32 has hollows 36 formed in each of the longitudinal walls 33, the lateral walls 34, and the extending portions 35. Each of the longitudinal walls 33 and the lateral walls 34 is provided with multiple hollows 36 arranged side by side in the vehicle height direction D3. In contrast, each of the extending portions 35 is provided with multiple hollows 36 arranged side by side in the vehicle width direction D2. Each of the longitudinal walls 33, the lateral walls 34, and the extending portions 35 is coupled to the bottom plate 31 by screw members 12 inserted from below the bottom plate 31.

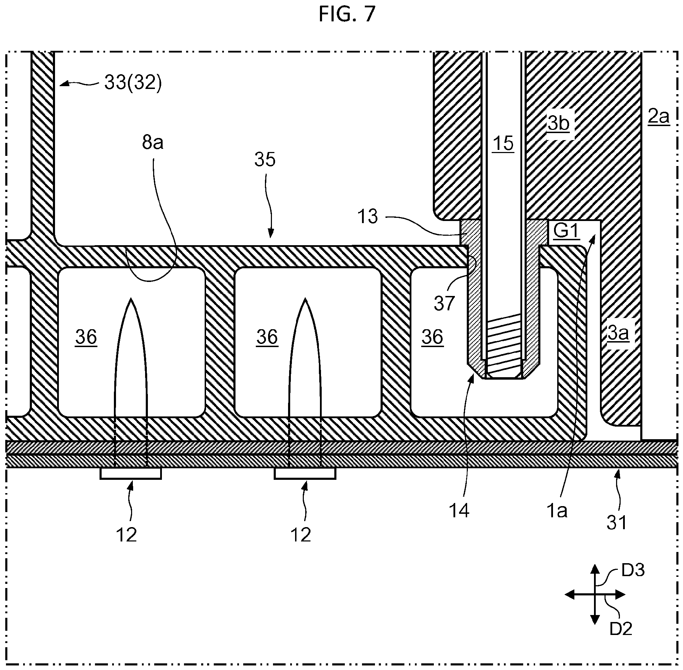

As illustrated in FIG. 7, the L-shaped module-ends 1a face the bottom plate 31 and are supported by the extending portions 35. The module-ends 1a of the present embodiment are positioned with respect to the respective extending portions 35 by arranging the thin parts 3a of the end plates 3 on the inner sides in the vehicle width direction D2 of the extending portions 35 and the thick parts 3b of the end plates 3 on or above the extending portions 35.

The module-ends 1a of the present embodiment are coupled to the respective extending portions 35 via spacers 13. That is, each of the module-ends 1a is disposed above the extending portion 35 with a gap G1 corresponding to the amount of the spacer 13 between the module-end 1a and the extending portion 35. This example illustrates the module-ends 1a each coupled to an extending end (the right end in FIG. 7) of the extending portion 35 via the spacer 13.

To be specific, the spacer 13 is a flange portion of a rivet nut 14 fixed to the extending portion 35. The rivet nut 14 is fitted into a through hole 37 formed on an upper face of the extending portion 35, and the flange portion functioning as the spacer 13 is disposed to overlap the upper face of the extending portion 35. To the rivet nut 14, a bolt 15 inserted from above the thick part 3b of the end plate 3 is fastened.

Each battery module 1 is fixed to the surrounding frame 32 by the fastening of the rivet nuts 14 and the bolts 15 described above while the gaps G1 are ensured between each of the module-ends 1a and the extending portions 35. Consequently, the battery modules 1 are accommodated in the housing 30 in a state where the module-ends 1a are supported by the extending portions 35 of the surrounding frame 32.

Further, each battery module 1 of the present embodiment is disposed in a state where the battery cells 2a are in contact with the bottom plate 31 serving as the cooling plate. However, the battery modules 1 may be provided in any posture as long as the module-ends 1a are supported by the extending portions 35 of the surrounding frame 32, meaning that the battery cells 2a may be disposed with a gap from the bottom plate 31 (above the bottom plate 31).

As illustrated in FIG. 5, the battery pack 10 of the present embodiment includes the first stiffener plate 7 and the second stiffener plates 8 each in a plate shape for reinforcing the housing 30. The first stiffener plate 7 and the second stiffener plates 8 are arranged on the bottom plate 31 and intersect with each other. Here, as an example, the first stiffener plate 7 extends along the vehicle length direction D1 (i.e., the cross direction), and the two second stiffener plates 8 each extend along the vehicle width direction D2 (i.e., the stacking direction Do).

The first stiffener plate 7 is accommodated (arranged) in the recess 4d of each battery module 1. In other words, the first stiffener plate 7 extends along the vehicle length direction D1 so as to penetrate through the recesses 4d of the four battery modules 1.

On the other hand, the two second stiffener plates 8 are provided so as to be separated from each other in the vehicle length direction D1, and are disposed between adjacent battery modules 1. That is, each of the second stiffener plates 8 extends along the vehicle width direction D2 between the battery modules 1 adjacent to each other.

The first stiffener plate 7 and the second stiffener plates 8 are fixed to at least one of the bottom plate 31 and the surrounding frame 32. In the present embodiment, both ends in the vehicle length direction D1 of the first stiffener plate 7 and both ends in the vehicle width direction D2 of each second stiffener plate 8 are fixed to the surrounding frame 32 by welding. In addition, the portions intersecting (overlapping) with each other in the first stiffener plate 7 and the second stiffener plates 8 are fixed to each other by welding.

The second stiffener plates 8 of the present embodiment each have L-shaped plate-ends 8a each facing the bottom plate 31 and supported by the extending portion 35 of the surrounding frame 32. The plate-ends 8a correspond to both ends in the vehicle width direction D2 of the second stiffener plate 8. The plate-ends 8a of the present embodiment are respectively connected to the extending portions 35 over the entire lengths in the vehicle width direction D2 of the extending portions 35.

As illustrated in FIG. 8, the lateral cross section (cross section orthogonal to the vehicle length direction D1) of the first stiffener plate 7 of the present embodiment is a closed cross section in a rectangular shape conforming to the recess 4d of the mid-plate 4. However, between the first stiffener plate 7 and each leg portion 4f of the mid-plate 4, a gap G2 is secured to prevent the interference of the mid-plate 4 and the first belt 5 with the first stiffener plate 7.

The first stiffener plate 7 of the present embodiment is an aluminum extruded profile, and has hollows 7a extending in the vehicle length direction D1. Here, the exemplified first stiffener plate 7 is provided with two hollows 7a arranged side by side in the vehicle height direction D3. Each hollow 7a is a rectangular shape when viewed from the vehicle length direction D1. The first stiffener plate 7 is coupled to the bottom plate 31 by screw members 16 inserted from below the bottom plate 31.

In the present embodiment, each second stiffener plate 8 is also an aluminum extruded profile, and has a hollow(s) (not illustrated) extending in the vehicle width direction D2. Each hollow of the second stiffener plates 8 is, for example, a rectangular shape similar to that of the hollow 7a of the first stiffener plate 7 when viewed from the vehicle width direction D2. The second stiffener plates 8 may also be provided with multiple hollows arranged side by side in the vehicle height direction D3.

The battery pack 10 of the present embodiment includes a fastening structure 9 that fastens the mid-plate 4 and the first stiffener plate 7 to each other. The fastening structure 9 is configured by, for example, a through-hole 9a formed through the mid-plate 4, a screw hole 9b formed in the first stiffener plate 7 so as to communicate with the through-hole 9a, and a bolt 9c inserted into the through-hole 9a and screwed to the screw hole 9b.

The through-hole 9a extends in the vehicle height direction D3 (height direction Dh) at a position different from those of the hollows 4e in the mid-plate 4. The screw hole 9b extends in the vehicle height direction D3 at a position different from those of the hollows 7a in the first stiffener plate 7. The bolt 9c is inserted to the through-hole 9a from above. In the fastening structure 9, the lower portion of the bolt 9c inserted to the through-hole 9a is screwed to the screw hole 9b, and thereby, the mid-plate 4 and the first stiffener plate 7 are fastened to each other.

### [2. Actions and Effects]

(1) In the battery pack 10, since the L-shaped module-end 1a is supported by the extending portion 35 of the surrounding frame 32, the weight of the battery module 1 can be received by the surrounding frame 32. Thus, as compared with the case where the entire battery module 1 is placed on the bottom plate 31, the load that acts on the bottom plate 31 can be reduced. As a result, the load bearing strength required for the bottom plate 31 decreases, which makes it possible to reduce the thickness of the bottom plate 31, so that a weight reduction in the bottom plate 31 can be realized. Therefore, in the battery pack 10, the energy density can be increased while the stiffness is secured.
(2) According to the bottom plate 31 which is a cooling plate that cools the battery modules 1 and includes the cooling passage 38 through which the coolant flows, the battery modules 1 can be cooled by the coolant flowing through the cooling passage 38. Such cooling of the battery modules 1 in the battery pack 10 makes it possible to efficiently control the temperature of the battery modules 1, and thereby, contributes to the extension of the cruising range of the electric vehicle 20.
   Further, if the battery modules 1 are disposed in contact with the bottom plate 31, heat can be exchanged directly between the bottom plate 31 and the battery modules 1, which increases the cooling efficiency of the battery modules 1. Thus, it contributes to further extension of the cruising range of the electric vehicle 20.
(3) If the module-end 1a is coupled to the extending portion 35 via the spacer 13 and is disposed with the gap G1 between the module-end 1a and the extending portion 35, heat can be suppressed from transferring from the module-end 1a to the extending portion 35 due to the gap G1. Therefore, it is possible to reduce the influence of heat in the battery module 1 to the surrounding frame 32. This provides protection for the surrounding frame 32 against the heat of the battery module 1 while providing support for the battery module 1 with the surrounding frame 32.
(4) According to the pair of end plates 3 disposed on both end faces of the cell stack 2 in the stacking direction Do and forming the module-ends 1a, the cell stack 2 can be supported from both sides in the stacking direction Do, and the L-shaped module-ends 1a can be easily formed. Therefore, the battery module 1 can be easily supported by the surrounding frame 32 while the stiffness of the battery module 1 is increased. Thus, the stiffness of the battery pack 10 can be further increased.
(5) To the cell stack 2 of the battery module 1, if the mid-plate 4 is disposed in addition to the pair of end plates 3, both end faces of the cell stack 2 in the stacking direction Do can be supported by the end plates 3, and in addition, the intermediate portion of the cell stack 2 in the stacking direction Do can be supported by the mid-plate 4. Thus, the stiffness can be increased at the intermediate portion as well as at the both end faces of the cell stack 2 in the stacking direction Do. Therefore, the stiffness of the battery module 1 can be increased.

Especially since the mid-plate 4 can increase the stiffness of the intermediate portion in the stacking direction Do where the bending deformation is likely to occur in the cell stack 2, the deformation of the cell stack 2 can be effectively suppressed. Accordingly, even if the number of battery cells 2a stacked in the cell stack 2 is increased, it is possible to suppress the bending deformation of the cell stack 2 with respect to the stacking direction Do. Further, even if the multiple battery cells 2a are individually deformed by, for example, thermal expansion, the distortion of the cell stack 2 can be suppressed. Thus, the reliability of the battery module 1 can be increased.

Further, with the first stiffener plate 7 fixed to at least one of the bottom plate 31 and the surrounding frame 32, the stiffness of the battery pack 10 can be increased. This enables the bottom plate 31 to be thinner and also can avoid the enlargement of the second stiffener plate 8 while ensuring the stiffness required in the battery pack 10.

Furthermore, if the mid-plate 4 is fixed to the first stiffener plate 7, it is possible to suppress the displacement of the mid-plate 4 with respect to the bottom plate 31 and/or the surrounding frame 32. This suppresses the positional deviation of the battery module 1 with respect to the bottom plate 31 and/or the surrounding frame 32, so that the reliability of the battery pack 10 can be further increased.

(6) If the recess 4d is provided on at least one of the side faces 4b, 4c of the mid-plate 4, the recess 4d can be used as a receiving space for another member(s) (in the present embodiment, the first belts 5 and the first stiffener plate 7). As in the present embodiment, by disposing the inner belt portions 5b of the first belts 5 in the recess 4d, the multiple battery cells 2a stacked between the end plate 3 and the mid-plate 4 can be held by the first belts 5 from both sides in the stacking direction Do, so that the stiffness of the battery module 1 can be further increased.

In addition, utilization of the recess 4d as the receiving space for another member(s) can obviate the need for providing a different space for arranging another member(s), realizing space saving. Thus, it is possible to increase the output while avoiding an increase in size and/or weight of the battery module 1, and therefore, the energy density can be further increased.

Further, the accommodation of the first stiffener plate 7 in the recess 4d of the mid-plate 4 can obviate the need for providing a different space for arranging the first stiffener plate 7 inside the surrounding frame 32, realizing space saving. Therefore, while increasing the stiffness of the battery pack 10 by the first stiffener plate 7, it is possible to further increase the energy density since the output can be increased while avoiding an increase in size and/or weight of the battery pack 10 by the accommodation of the first stiffener plate 7 in the recess 4d.

(7) If the second stiffener plates 8 extend along the stacking direction Do between adjacent battery modules 1, the second stiffener plates 8 can be disposed by utilizing the dead space between the battery modules 1. Accordingly, while further increasing the stiffness of the battery pack 10 with the second stiffener plates 8, it is possible to further increase the energy density since the output can be increased while avoiding an increase in the size of the battery pack 10.

Further, according to the second stiffener plates 8 fixed between the adjacent battery modules 1, it is possible to suppress the positional deviation between the adjacent battery modules 1. Thus, the reliability of the battery pack 10 can be enhanced.

Furthermore, if the L-shaped plate-end 8a is supported by the extending portion 35 of the surrounding frame 32, the weight of the second stiffener plate 8 (and members supported by the second stiffener plate 8) can also be received by the surrounding frame 32. This can further reduce the load that acts on the bottom plate 31 as compared with the case where the entire second stiffener plate 8 is placed on the bottom plate 31. As a result, the load bearing strength required for the bottom plate 31 further decreases, which makes it possible to further reduce the thickness of the bottom plate 31. Therefore, in the battery pack 10, the energy density can be further increased while the stiffness is secured.

In addition, according to the first stiffener plate 7 and the second stiffener plates 8 intersecting each other, the stiffness of the battery pack 10 can be increased in two different directions. This can effectively suppress the deformation of the battery pack 10 even in a collision of the electric vehicle 20. Therefore, the protectability of the battery pack 10 can be ensured.

(8) According to the surrounding frame 32 which is an aluminum extruded profile and has the hollows 36 formed in the extending portion 35, it is possible to suppress the weight increase while securing the stiffness for supporting the module-end 1a. This can further increase the energy density of the battery pack 10.

(9) If there is provided the first belt 5, which is in an endless belt shape and holds the multiple battery cells 2a stacked between the end plate 3 and the mid-plate 4 from both sides in the stacking direction Do, the multiple battery cells 2a can be restrained by the first belt 5. Especially, since the first belt 5 holds a part of the battery cells 2a (either one of the first group 2B and the second group 2C) rather than the entire battery cells 2a stacked in the cell stack 2, the individual battery cells 2a can be effectively restrained as compared with the second belt 6 that holds the entire cell stack 2.

Further, according to the first belt 5, since the multiple battery cells 2a are held from both sides in the stacking direction Do, it is possible to easily absorb deformation due to thermal expansion of the individual battery cells 2a, and also to suppress vibrations in the stacking direction Do. Furthermore, according to the first intermediate portions 5c connecting the first outer belt portion 5a and the inner belt portion 5b in the first belt 5, it is also possible to suppress vibrations in the direction perpendicular to the stacking direction Do (in the present embodiment, the width direction Dw). Thus, if the first belt 5 is provided, the stiffness of the battery module 1 can be further increased. This further suppresses the deformation of the cell stack 2, so that the reliability of the battery module 1 can be further enhanced.

The disposition of the inner belt portion 5b of the first belt 5 in the recess 4d of the mid-plate 4 can obviate the need for providing a different space for arranging the inner belt portion 5b of the first belt 5, realizing space saving. Therefore, a decrease in the energy density can be further suppressed.

(10) If the pair of first belts 5 is provided on both sides of the mid-plate 4 in the stacking direction Do, respectively, the first group 2B and the second group 2C of the cell stack 2 can be restrained at both sides of the mid-plate 4 in the stacking direction Do by the pair of first belts 5, respectively. In addition to this, if there is provided the second belt 6, which is in an endless belt shape and holds the cell stack 2 from both sides in the stacking direction Do, the entire cell stack 2 can be restrained by the single second belt 6.

As such, by combining the pair of the first belts 5 and one second belt 6, while effectively restraining the individual battery cells 2a by each of the first belts 5, it is possible to suppress the relative positional deviation between the first group 2B and the second group 2C by the second belt 6. Therefore, the stiffness of the battery module 1 can be further increased.

Further, according to the second belt 6, as in the case of the first belt 5, since the multiple battery cells 2a are held from both sides in the stacking direction Do, it is possible to easily absorb the deformation due to the thermal expansion of the individual battery cells 2a, and also to suppress vibrations in the stacking direction Do. In addition, according to the second intermediate portions 6c connecting the second outer belt portions 6a to each other in the second belt 6, it is also possible to suppress vibrations in the direction perpendicular to the stacking direction Do (in the present embodiment, the width direction Dw). Therefore, the stiffness of the battery module 1 can be further increased.

(11) If the mid-plate 4 is an aluminum extruded profile and has the hollows 4e extending in the width direction Dw (the cross direction) in which the recess 4d extends, the mid-plate 4 can be easily manufactured by extrusion with the width direction Dw set as the extrusion direction. Thus, manufacturing of the mid-plate 4 can be facilitated, and also, the weight of the mid-plate 4 can be reduced by the hollows 4e.

(12) If the fastening structure 9 that fastens the mid-plate 4 and the first stiffener plate 7 to each other is provided, the displacement of the mid-plate 4 relative to the first stiffener plate 7 can be prevented. Therefore, the position of the battery module 1 in the housing 30 can be stabilized, and because the position of the mid-plate 4 is stabilized, the deformation of the battery module 1 itself can be further suppressed. Thus, the reliability of the battery pack 10 can be enhanced.

(13) According to the electric vehicle 20 including the battery pack 10, since the energy density can be increased while the stiffness of the battery pack 10 is secured as described above, the protectability of the battery pack 10 can be secured even in a collision, and an excellent cruising range can be realized.

In general, electric trucks, which are heavier than passenger cars, require large battery packs to ensure cruising ranges. On the other hand, electric trucks are required to secure at least a predetermined value of a distance (ground height) from the road surface to the battery packs, so that the height dimension of the battery packs (dimension in the vehicle height direction) may be hindered from increasing. In particular, the battery pack disposed below the side rails and suspended from the side rails is difficult to ensure the ground height, and the bottom plate thereof tends to be thicker since a high stiffness is required in the bottom plate that supports the battery module(s). Therefore, it has been a challenge to increase the energy density while suppressing the height dimension of the battery pack.

With regard to this, in the electric vehicle 20, since the thickness of the bottom plate 31 can be reduced by the configuration in which the weight of the battery modules 1 is received by the surrounding frame 32 as described above, the energy density can be increased while the height dimension of the battery pack 10 is suppressed. This makes it easy to secure the ground height even in the battery pack 10 suspended and supported by the side rails 23, and also makes it possible to secure a cruising range of the electric vehicle 20.

### [3. Modifications]

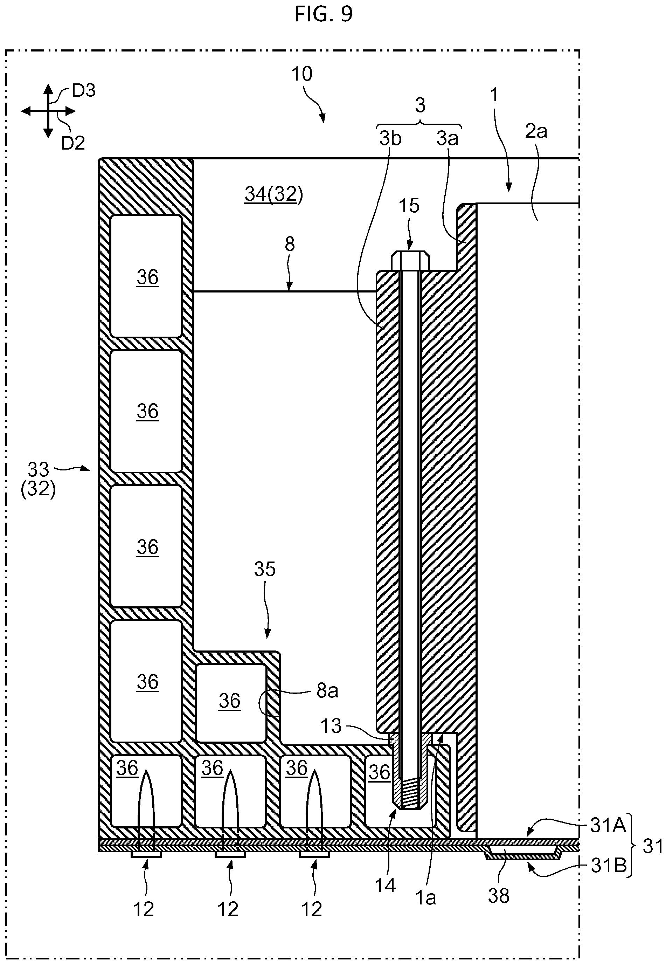

The extending portion 35 described above is an example. As illustrated in FIG. 9, the lateral cross section of the extending portion 35 may be in a shape of stairs. This example illustrates the extending portion 35 that has the lateral cross section in an L-shape. When such an extending portion 35 in a shape of stairs is formed, the plate-end 8a of the second stiffener plate 8 is also formed in a shape corresponding thereto. To be specific, the plate-end 8a is formed in a shape of stairs containing multiple L-shapes. It should be noted that, in FIG. 9, the same or corresponding elements as those described in the above embodiment are denoted by the same reference signs.

According to such an extending portion 35 in a shape of stairs, the stiffness can be increased as compared with the rectangular extending portion 35 illustrated in the above embodiment, which makes it possible to support the module-end 1a more stably and also to suppress deformation of the bottom plate 31 and/or the longitudinal wall 33. Thus, the stiffness of the battery pack 10 can be further increased. On the other hand, according to the rectangular extending portion 35 illustrated in the above embodiment, it is possible to save space as compared with the extending portion 35 in a shape of stairs as illustrated in FIG.9, which makes it easy to avoid enlargement of the surrounding frame 32.

Incidentally, the extending portion 35 should at least protrude toward the inside of the surrounding frame 32 so as to be able to support the module-end 1a, and instead of extending over the entire length in the vehicle length direction D1 of the longitudinal wall 33, may be provided only in a specific position corresponding to the module-end 1a. Further, the two extending portions 35 provided in the surrounding frame 32 may have configurations different from each other.

The module-end 1a should at least face the bottom plate 31 and be in an L-shape to be supported by the extending portion 35, and may alternatively be formed of a member other than the end plate 3, or may be disposed in contact with the extending portion 35 (without the gap G1 described above).

The recess 4d of the mid-plate 4 may extend in various directions intersecting the stacking direction Do, and may extend, for example, in a direction slightly inclined relative to the width direction Dw. Further, the recess 4d may extend in the height direction Dh when, for example, being provided on the longitudinal face 4c.

The recess 4d may be provided on two or more of the multiple side faces 4b, 4c. When multiple recesses 4d are provided in the mid-plate 4, the individual recesses 4d can be used as receiving spaces for other members, which realizes further space saving. In addition, if the multiple recesses 4d are utilized as the receiving spaces for arranging the inner belt portions 5b of the first belts 5, an increased number of first belts 5 can be arranged, so that the stiffness of the battery module 1 can be further increased.

On the other hand, according to the mid-plate 4 provided with only one recess 4d as in the above embodiment, the stiffness can be easily secured, so that the deformation of the cell stack 2 can be further suppressed as compared with the case where multiple recesses 4d are provided.

The shapes of the end plates 3 and the mid-plate 4 described above are merely examples. Each shape of the end plates 3 and the mid-plate 4 may be appropriately set according to the shape of the battery cells 2a. The shape of the recess 4d provided in the mid-plate 4 may be appropriately set according to the shape of another member(s) to be accommodated in the recess 4d. The shape, the number, and the arrangement of the hollows 4e of the mid-plate 4 should not be limited to the above examples. The mid-plate 4 may be other than an aluminum extruded profile, and may omit the recess 4d and/or the hollows 4e.

The first belt 5 may be in any posture capable of holding the multiple battery cells 2a from both sides in the stacking direction Do, and may be in a posture that, for example, the first outer belt portion 5a and the inner belt portion 5b each extend in the height direction Dh, and the first intermediate portions 5c extend in the stacking direction Do to be disposed outside in the height direction Dh of the multiple battery cells 2a. Similarly, the arrangement of the second belt 6 should not be limited to the above example. The end plates 3, the mid-plate 4, the first belts 5 and the second belt 6 may be omitted from the battery module 1.

The configuration of the battery pack 10 described above is an example. The number of battery modules 1 provided in the battery pack 10 may be one or more. The postures of the battery modules 1 in the battery pack 10 is not particularly limited. For example, the battery modules 1 may be received in the housing 30 in postures that the stacking directions Do thereof coincide with the vehicle length direction D1, or may be received in the housing 30 in postures that the recesses 4d thereof face to the sides (toward surrounding frame 32) or up (toward the lid plate).

The specific structure of the bottom plate 31 should not be limited to the above example. The bottom plate 31 may omit the function of a cooling plate. That is, the bottom plate 31 may omit the cooling passage 38 therein. In this case, the thickness of the bottom plate 31 can be further reduced.

The structure of the surrounding frame 32 described above is also an example. The surrounding frame 32 may have a shape other than a square tube. In addition, the surrounding frame 32 may be other than an aluminum extruded profile, and may omit the hollows 36.

The extending directions, the numbers, and the arrangements of the first stiffener plate 7 and the second stiffener plates 8 should not be limited to the above examples. The first stiffener plate 7 and the second stiffener plates 8 may each be other than an aluminum extruded profile, and the hollows thereof may be omitted. Either one or both of the first stiffener plate 7 and the second stiffener plates 8 may be omitted from the battery pack 10.

The fastening structure 9 described above is an example. As the fastening structure 9, various structures that fastens the mid-plate 4 and the first stiffener plate 7 to each other can be applied. Incidentally, the fastening structure 9 can also be omitted from the battery pack 10.

The target to which the battery pack 10 is applied should not be limited to the above-described electric vehicle 20. The battery pack 10 may be applied to, for example, an electric vehicle other than a truck.

### [Reference Signs List]

- 1: battery module
- 1a: module-end
- 2: cell stack
- 2a: battery cell
- 2B: first group
- 2C: second group
- 3: end plate
- 3a: thin part
- 3b: thick part
- 4: mid-plate
- 4a: main face
- 4b: lateral face (side face)
- 4c: longitudinal face (side face)
- 4d: recess
- 4e: hollow
- 4f: leg part
- 5: first belt
- 5a: first outer belt portion
- 5b: inner belt portion
- 5c: first intermediate portion
- 6: second belt
- 6a: second outer belt portion
- 6c: second intermediate portion
- 7: first stiffener plate
- 7a: hollow
- 8: second stiffener plate
- 8a: plate-end
- 9: fastening structure
- 9a: through-hole
- 9b: screw hole
- 9c: bolt
- 10: battery pack
- 11: heating foil
- 12: screw member
- 13: spacer
- 14: rivet nut
- 15: bolt
- 16: screw member
- 20: electric vehicle (vehicle, electric truck)
- 21: cab
- 22: cargo box
- 23: side rail
- 30: housing

## Claims

1. A vehicular battery pack comprising:
a battery module including a plurality of battery cells that supply power to a motor for driving a vehicle;
a bottom plate installed below the battery module; and
a surrounding frame disposed on the bottom plate and surrounding the battery module, wherein:
the surrounding frame includes an extending portion protruding inwardly and connected to the bottom plate; and
the battery module includes an L-shaped module-end facing the bottom plate and supported by the extending portion.

2. The vehicular battery pack according to claim 1, wherein the bottom plate is a cooling plate that cools the battery module and includes a cooling passage through which coolant flows.

3. The vehicular battery pack according to claim 1 or 2, wherein the module-end is coupled to the extending portion via a spacer and is disposed with a gap between the module-end and the extending portion.

4. The vehicular battery pack according to any one of claims 1 to 3, wherein the battery module includes: a cell stack in which the battery cells are stacked along a predetermined stacking direction; and a pair of end plates disposed on both end faces of the cell stack in the stacking direction and forming the module-ends.

5. The vehicular battery pack according to claim 4, further comprising a first stiffener plate extending in a cross direction that intersects the stacking direction and fixed to at least one of the bottom plate and the surrounding frame, wherein
the battery module includes a mid-plate disposed in an intermediate portion of the cell stack in the stacking direction and fixed to the first stiffener plate.

6. The vehicular battery pack according to claim 5, wherein the mid-plate includes:
a pair of main faces each facing the battery cell; a plurality of side faces each connecting outer edges of the pair of main faces; and a recess extending in the cross direction at one of the side faces and accommodating the first stiffener plate therein.

7. The vehicular battery pack according to any one of claims 1 to 6, further comprising:
a plurality of the battery modules arranged in parallel in postures that stacking directions along which the battery cells are stacked are parallel to each other; and
a second stiffener plate that extends along the stacking directions between the battery modules adjacent to each other and that is fixed to the surrounding frame, wherein
the second stiffener plate includes an L-shaped plate-end facing the bottom plate and supported by the extending portion.

8. The vehicular battery pack according to any one of claims 1 to 7, wherein the surrounding frame is an aluminum extruded profile and includes a hollow formed in the extending portion.

9. An electric truck comprising:
the vehicular battery pack defined in any one of claims 1 to 8; and
a pair of side rails disposed above the vehicular battery pack to suspend and support the vehicular battery pack.
